(19) Europäisches Patentamt

European Patent Office

Office européen des brevets

(11) **EP 1 148 626 B1**

(12) **EUROPÄISCHE PATENTSCHRIFT**

(45) Veröffentlichungstag und Bekanntmachung des Hinweises auf die Patenterteilung:
**25.05.2005   Patentblatt 2005/21**

(51) Int Cl.$^7$: **H02M 3/335**

(21) Anmeldenummer: **01108255.9**

(22) Anmeldetag: **31.03.2001**

(54) **Schaltnetzteil mit geregelter Ausgangsspannung**

Switching power supply with regulated output voltage

Alimentation de puissance à découpage avec tension de sortie réglée

(84) Benannte Vertragsstaaten:
**AT CH DE FR IT LI**

(30) Priorität: **19.04.2000   DE 10019329**

(43) Veröffentlichungstag der Anmeldung:
**24.10.2001   Patentblatt 2001/43**

(73) Patentinhaber: **ABB PATENT GmbH**
**68526 Ladenburg (DE)**

(72) Erfinder:
  • **Zehnich, Paul**
    **67122 Altrip (DE)**
  • **Schramm, Robert**
    **76756 Bellheim (DE)**
  • **Mast, Jochen**
    **69126 Heidelberg (DE)**
  • **Heinemann, Lothar, Dr.**
    **69493 Hirschberg (DE)**

(74) Vertreter: **Miller, Toivo et al**
**ABB Patent GmbH**
**Postfach 1140**
**68520 Ladenburg (DE)**

(56) Entgegenhaltungen:
**US-A- 4 704 670**

  • **THIEME R:**
    **"SPERRWANDLER-KONSTANTLEISTUNGSQUELLE" RADIO FERNSEHEN ELEKTRONIK, VEB VERLAG TECHNIK. BERLIN, DE, Bd. 40, Nr. 9, 1991, Seiten 560-562, XP000259754 ISSN: 1436-1574**

**Beschreibung**

Die Erfindung bezieht sich auf ein Schaltnetzteil mit geregelter Ausgangsspannung gemäß dem Oberbegriff des Anspruchs 1.

Solche Schaltnetzteile sind allgemein bekannt, und beispielsweise in der US 4 704 670, in Thieme R: "Sperrwandler-Konstantleistungsquelle" Radio Fernsehen Elektronik, VEB Verlag Technik. Berlin, DE, Bd. 40, Nr. 9 1991, Seiten 560-562, XP000259754 ISSN; 1436-1574 und O. Kielgenstein, "Schaltnetzteile in der Praxis", Vogel Buchverlag Würzburg, 1. Auflage 1986 in Form mehrerer Ausführungsbeispiele beschrieben.

Handelsübliche Schaltnetzteile mit einem Gleichspannungsausgang sind üblicherweise so ausgelegt, daß sie einen angeschlossenen Verbraucher - auch bei variabler Belastung - mit einer nahezu konstanten Ausgangsgleichspannung versorgen. Derartige Schaltnetzteile bestehen typisch aus einigen wenigen passiven Komponenten, mindestens einem passiven Leistungshalbleiter (Diode) und einem aktiven Leistungshalbleiter (z.B. MOSFET), sowie den Bauelementen für die Realisierung einer Regelung, einer Ansteuerschaltung für den aktiven Leistungshalbleiter, sowie der notwendigen Hilfsstromversorgung zur Versorgung der Regelung und der Ansteuerung. Der aktive Leistungshalbleiter wird dabei gewöhnlich periodisch ein- und ausgeschaltet. Durch Veränderung des Verhältnisses von Einschaltzeit zur Periodendauer, also durch Pulsweitenmodulation (PWM), erfolgt schließlich die Regelung der Ausgangsspannung.

Die Ausgangsspannungskennlinie $U_A = f(I_A)$ eines solchen Schaltnetzteils mit Regelung der Ausgangsspannung auf konstante Ausgangsspannung ist sehr einfach. Sie entspricht einer Geraden mit der Steigung Null, d.h. die Ausgangsgleichspannung in Abhängigkeit des Ausgangsstromes = konstant.

In manchen Anwendungsfällen wäre eine, hier als Kennliniensteuerung bezeichnete Betriebsweise wünschenswert, bei der sich die Ausgangsspannung gemäß einer vorgebbaren Kennlinie $U_A = f(I_A)$ abhängig vom Laststrom ändert. Beispielsweise um einen Konstantleistungsbetrieb, Kurzschlußfestigkeit oder sicheren Parallelbetrieb mehrerer Schaltnetzteile zu erreichen. Eine derartige Kennliniensteuerung lassen bekannte Schaltnetzteile nicht zu, oder würden einen erheblichen Zusatzaufwand erfordern.

Der Erfindung liegt deshalb die Aufgabe zu Grunde, ein Schaltnetzteil anzugeben, mit dem eine prinzipiell beliebige Kennliniensteuerung auf einfache und damit kostengünstige Weise realisierbar ist.

Diese Aufgabe wird durch ein Schaltnetzteil mit den im Anspruch 1 angegebenen Merkmalen gelöst. Vorteilhafte Ausgestaltungen sind in weiteren Ansprüchen angegeben.

Mit der Erfindung wird eine modulare Ausführung der Steuer- und Regeleinrichtung des Schaltnetzteils vorgeschlagen, wobei Ausgänge mehrerer Regelstufen parallel geschaltet sind, wodurch bei einer Ausführung mit Potentialtrennung nur ein potentialtrennendes Koppelglied, z. B. ein Optokoppler am Eingang der Ansteuerschaltung des Leistungsteils benötigt wird.

Eine weitere Beschreibung der Erfindung und deren Vorteile erfolgt nachstehend anhand eines in Zeichnungsfiguren dargestellten Ausführungsbeispiels.

Es zeigt:

Fig. 1      ein Schaltnetzteil nach dem Stand der Technik,

Fig. 2      eine erfindungsgemäße Abwandlung des in Fig. 1 gezeigten Schaltnetzteils, und

Fig. 3      ein Beispiel einer Ausführung der Steuer- und Regeleinrichtung zur Kennliniensteuerung.

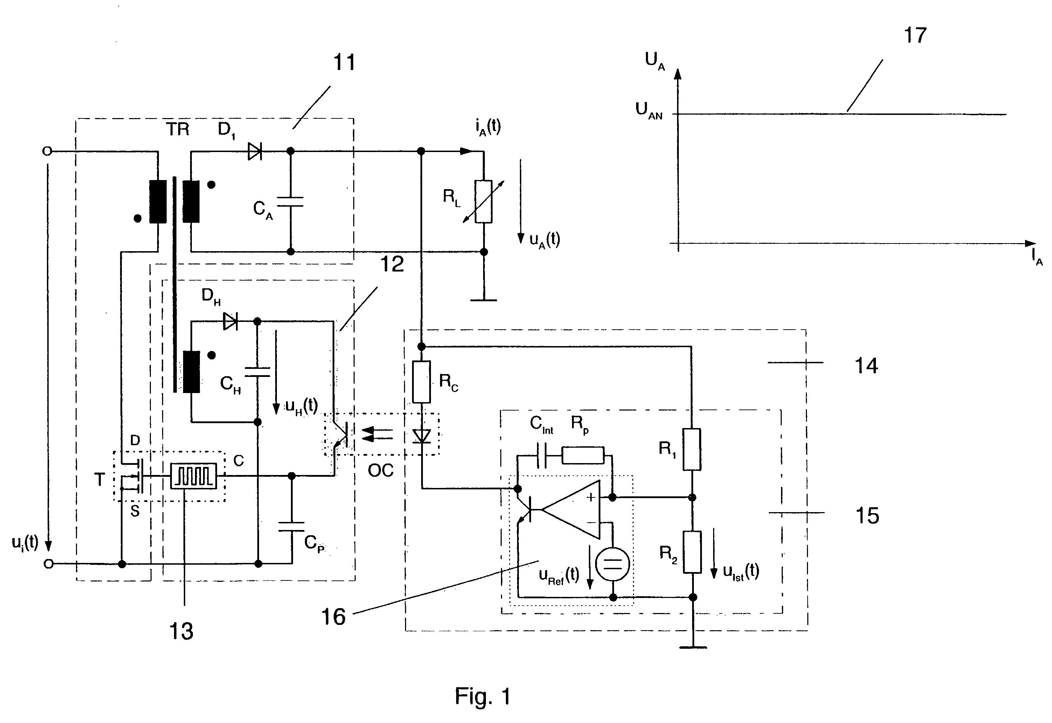

Das in Fig. 1 dargestellte Schaltnetzteil mit Potentialtrennung enthält einen Leistungsteil 11 mit einer angeschlossenen variablen Last, die ein Lastwiderstand $R_L$ oder eine ohmschinduktiuve Last sein kann. Eine Steuer- und Regeleinrichtung 14 dient zur Erfassung der zu regelnden Größe auf der Sekundärseite, also der Ausgangsgleichspannung $U_A$, und zur Erzeugung des Steuersignals für eine Pulsdauer- oder Pulsweitenmodulation (PWM) des Leistungsteils 11, das einer Ansteuerung 12 mittels eines Optokopplers OC als Eingangssignal zugeführt ist.

Der Leistungsteil 11 ist als Sperrwandler ausgeführt, der aus nur einem aktiven Leistungshalbleiter T, einem Transformator TR, einer Gleichrichtdiode $D_1$ und einem Glättungskondensator $C_A$ besteht. Beim verwendeten aktiven Leistungshalbleiter T sind Komponenten zur Ansteuerung und zur Bildung eines PWM-Signals mit in das Gehäuse des Leistungshalbleiters integriert, so daß ein Leistungsschalter 13 mit integrierten Zusatzfunktionen entsteht, der von mehreren Herstellern angeboten wird.

Die Erfassung der zu regelnden Größe (= Ausgangsspannung $u_A(t)$) erfolgt sekundärseitig mit einem Schaltungsteil einer Regelstufe 15 der Steuer- und Regeleinrichtung 14. Dieser Schaltungsteil besteht aus einer Reihenschaltung von Widerständen $R_1$ und $R_2$ mit Welcher eine Ist-Spannung $u_{Ist}(t)$ über dem Widerstand $R_2$ erzeugt wird. Die Ist-Spannung $u_{Ist}(t)$ wird an den positiven Eingang eines nicht bezeichneten Verstärkers gelegt und mit einer Referenzspannung $u_{Ref}(t)$ aus einer Spannungsquelle, die am negativen Eingang des Verstärkers angeschlossen ist, verglichen. Der Ausgang des Verstärkers ist mit der Basis eines nachgeschalteten Bipolartransistors verbunden. Referenzspannung $u_{Ref}(t)$, Verstärker und Bipolartransistor bilden zusammen einen sogenannten Shuntregler 16. Durch die Beschaltung des Shuntreglers 16 mit einer Reihenschaltung aus einem Kondensator $C_{Int}$ und einem Widerstand $R_p$ ist ein PI-Regler ausgeführt, mit dem eine am Eingang des Verstärkers gebildete Spannungsdifferenz $u_{Ist}(t) - u_{Ref}(t)$ ausgeregelt wird. Für den stationären Zu-

stand gilt also:

$$\frac{U_a}{U_{Ref}} = \frac{R_1 + R_2}{R_2} \, ,$$

was zu der dargestellten Ausgangskennlinie 17 führt. Die Übertragung des äquivalenten Signals auf die Primärseite erfolgt mit dem Optokoppler OC. Möglich sind zur Übertragung aber auch andere bekannte Schaltungen, wie z.B. die Übertragung des Signals mit Hilfe eines Impulstransformators, einer sekundärseitigen Modulationsstufe und einer primärseitigen Demodulationsstufe. Ein Widerstand Rc dient als Arbeitswiderstand für den Shuntregler. Die Lichtintensität der Leuchtdiode des Optokopplers hängt vom Strom durch den Arbeitswiderstand ab. Das primärseitig empfangene Signal ist auf den "Control-Eingang" des Leistungsschalters 13 mit den integrierten Zusatzfunktion geführt.

Die notwendige Hilfsenergieversorgung auf der Primärseite wird im dargestellten Beispiel durch eine dritte Wicklung des Transformators TR in Verbindung mit einer Diode $D_H$ und einem Kondensator $C_H$ erzeugt.

Eine der in Fig. 1 gezeigten bekannten Schaltung entsprechende Schaltung ist in Power Integrations "Data Book and Design Guide", 1996-97, Seite 2-51 beschrieben. Es sind außerdem Abwandlungen dieser Schaltung, insbesondere bezüglich der Wandlerart bekannt.

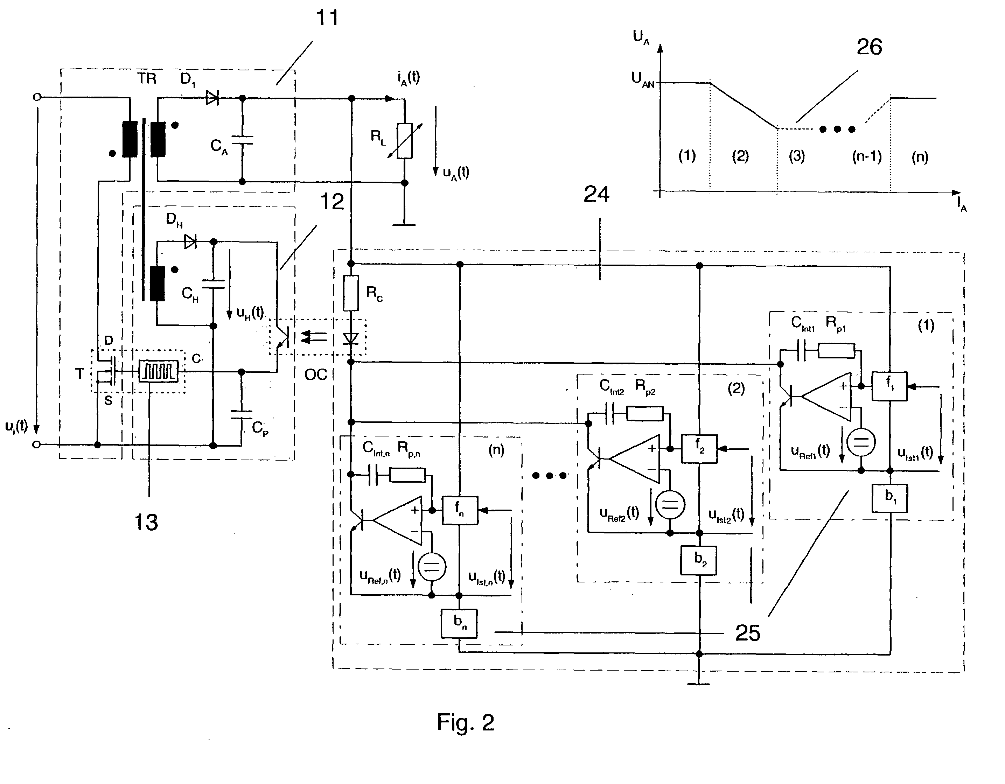

Fig. 2 zeigt eine ähnliche Schaltung eines Schaltnetzteils, die jedoch eine erfindungsgemäße Erweiterung aufweist, die sich auf die mit 24 bezeichnete Steuer- und Regeleinrichtung bezieht.

Die mit der Schaltung gemäß Fig. 1 übereinstimmenden Schaltungsteile sind in Fig. 2 übereinstimmend bezeichnet. Das sind insbesondere die Funktionsblöcke 11 und 12, die ebenso wie beim Stand der Technik auch alternativ ausgeführt sein können.

Die erfindungsgemäße Steuer- und Regeleinrichtung 24 enthält eine Anzahl $n$ ($n$ ist im Prinzip beliebig ganzzahlig) von Regelstufen 25. Die Regelstufen 25 sind in modularer Weise so angeordnet, daß sie zwar im Prinzip schaltungstechnisch unabhängig voneinander wirken, durch Parallelschaltung ihrer Ausgangssignale aber ein gemeinsames Signal zur Ansteuerung des primärseitigen Leistungsschalters 13 gebildet wird. Dadurch wird nur ein Optokoppler OK benötigt. Jede der Regelstufen 25 bildet das erforderliche Ansteuersignal für einen jeweiligen Abschnitt (1) bis (n) einer mit 26 bezeichneten Kennlinie. Damit wird die angestrebte Kennliniensteuerung mit $n$ unterschiedlichen Teilabschnitten, die sich jeweils aneinander anschließen, erreicht. Die Kennliniensteuerung wird somit vorteilhaft ohne eine Änderung der Funktionsblöcke 11 und 12 erreicht. Jede Regelstufe 25 besteht dabei im wesentlichen aus einem vorzugsweise als PI-Regler verschalteten Shunt-Regler, sowie zwei einfachen Schaltungen, mit der die Beschaltung des Shunt-Reglers erfolgt. Diese beiden Schaltungen sind als Funktionsblöcke $f_i$ und $b_i$ dargestellt ($i = 1,2, .... n$). Je nachdem, welche Regelfunktion die jeweiligen Regelstufen 25 erfüllen sollen, werden die Funktionsblöcke $f_i$ und $b_i$ mit entsprechenden Schaltungen, im wesentlichen Kombinationen aus passiven Bauelementen wie Widerstände und Kondensatoren, realisiert.

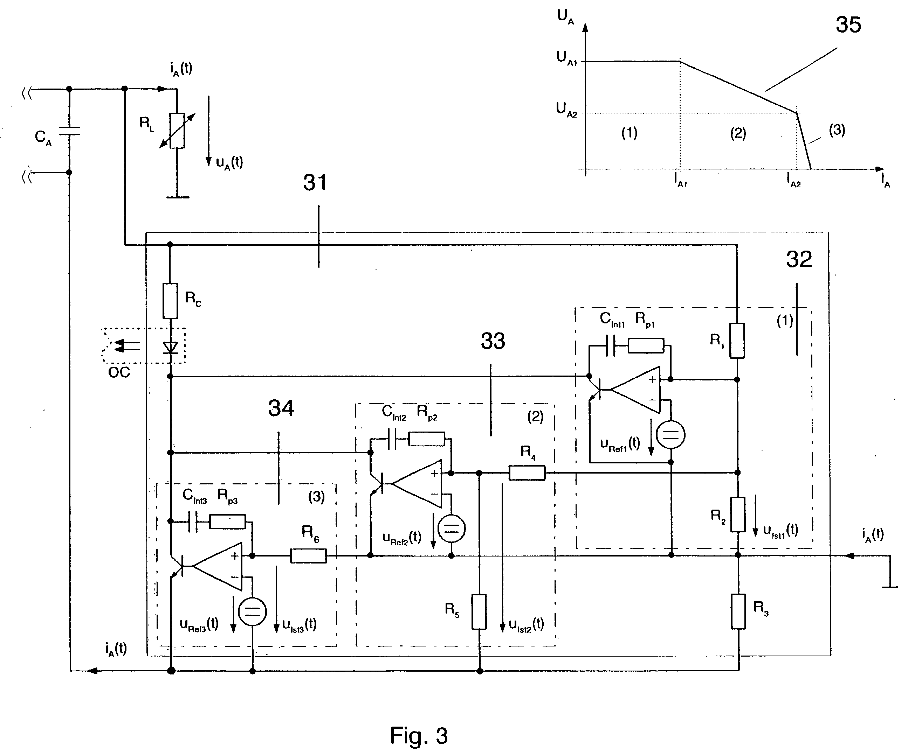

Fig. 3 zeigt beispielhaft eine Ausführung der Steuer- und Regeleinrichtung, die mit 31 bezeichnet ist, und die drei Regelstufen 32, 33, und 34 enthält. Sie ermöglicht die Realisierung einer dargestellten und mit 35 bezeichneten Kennlinie, die drei Teilabschnitte (1) bis (3) aufweist. Teilabschnitt (1) gewährleistet eine konstante Ausgangsspannung $U_A$ bis zu einem Ausgangsstrom $I_{A1}$. Dieser Abschnitt (1) der Ausgangskennlinie 35 wird mit der ersten Regelstufe 32 erreicht, die identisch aufgebaut sein kann, wie die in Fig. 1 gezeigte bekannte Regelstufe 15.

Der zweite Teilabschnitt (2) der Ausgangskennlinie 35 zeigt einen Bereich mit einer Geraden, die eine von Null verschiedene Steigung aufweist, womit bei steigendem Ausgangsstrom die Ausgangsspannung verringert wird. Ein solches Verhalten kann beispielsweise bei einer Parallelschaltung von Schaltnetzteilen zur Steuerung der Stromaufteilung erwünscht sein. Schaltungstechnisch wird dies durch die zweite Regelstufe 33, eine Widerstandsbeschaltung $R_4$ und $R_5$, sowie eine Widerstandsbeschaltung $R_2$ und $R_3$ erreicht. Der Widerstand $R_2$ liefert ein der Ausgangsspannung $U_A$ äquivalentes, der Widerstand $R_3$ ein dem Ausgangsstrom $I_A$ äquivalentes Signal. Zu beachten ist, daß die masseseitige Verbindungsleitung zwischen Lastwiderstand $R_L$ und Glättungskondensator $C_A$ des Leistungsteils 11 aufgetrennt ist, um den Laststrom $i_A(t)$ mittels des Widerstands $R_3$ erfassen zu können.

Mit dem dritten Teilabschnitt (3) wird eine Kurzschlußstrombegrenzung erreicht, die wirkt, wenn der Ausgangsstrom eine maximal zulässige Größe, hier $I_{A2}$ überschritten hat. Zur Erfassung des Kurzschlußstromes dient, wie bereits erwähnt, der Widerstand $R_3$. Der dritte Teilabschnitt (3) ist mittels der dritten Regelstufe 34 realisiert.

**Patentansprüche**

1. Schaltnetzteil zur Speisung eines Verbrauchers mit einer variablen Last ($R_L$), das einen Leistungsteil (11), eine Ansteuerschaltung (12) und eine Steuer- und Regeleinrichtung (24, 31) zur Bildung eines vom Ausgangsgleichstrom ($I_A$) des Schaltnetzteils abhängig geregelten Eingangssignals der Ansteuerschaltung (12) aufweist, **dadurch gekennzeichnet, daß** die Steuer- und Regeleinrichtung (24, 31) eine Anzahl $n$ von Regelstufen (25, 32, 33, 34) aufweist, deren Ausgänge parallel geschaltet sind zur Bildung des Eingangssignals der Ansteuerschaltung (12), die Regelstufen (25, 32, 33, 34) dafür eingerichtet sind, ein resultierendes Eingangssignal der Ansteuerschaltung (12) zu bilden, und jede der Regelstufen (25,32,33,24) das erforderliche Ansteuerungssignal für einen jeweiligen Abschnitt (1) bis(n) einer Kennlinie (26) bildet, das bewirkt, daß die Ausgangsgleichspannung ($U_A$) des Schaltnetzteils in vorgebbaren Bereichen des Ausgangsgleichstroms ($I_A$) jeweils gemäß einer vorgebbaren Charakteristik verändert wird.

2. Schaltnetzteil nach Anspruch 1, **dadurch gekennzeichnet, daß** der Leistungsteil (11) als pulsweitenmodulierter Sperrwandler ausgeführt ist.

3. Schaltnetzteil nach einem der vorstehenden Ansprüche, **dadurch gekennzeichnet, daß** die Regelstufen (25, 32, 33, 34) als beschaltete Shunt-Regler ausgeführt sind.

4. Schaltnetzteil nach einem der vorstehenden Ansprüche, **dadurch gekennzeichnet, daß** die Regelstufen (25, 32, 33, 34) als beschaltete Shunt-Regler ausgeführt sind.

## Claims

1. A switched-mode power supply for supplying a consumer with a variable load ($R_L$), comprising a power section (11), a trigger circuit (12) and an open-loop and closed-loop control device (24, 31 ) for forming an input signal of the trigger circuit (12) which is controlled by the output direct current ($I_A$) of the switched-mode power supply, **characterized in that** the open-loop and closed-loop control device (24, 31) comprises a number $n$ of closed-loop control stages (25, 32, 33, 34) whose outputs are switched in parallel for forming the input signal of the trigger circuit (12), the closed-loop control stages (25, 32, 33, 34) are configured to form a resulting input signal of the trigger circuit (12), and each of the closed-loop control stages ((25, 32, 33, 34) forms the required control pulse for a respective section (1) to (n) of a characteristic (26) which ensures that the output direct current ($U_A$) of the switched-mode power supply is changed in predeterminable regions of the output direct current ($I_A$) according to predetermined characteristics.

2. A switched-mode power supply according to claim 1, **characterized in that** the power section (11) is configured as a pulse-width-modulated flyback converter.

3. A switched-mode power supply according to claim 1 or 2, **characterized in that** the input signal is supplied by means of an optoelectronic coupler (OC) in an isolated manner to the trigger circuit (12).

4. A switched-mode power supply according to one of the preceding claims, **characterized in that** the control stages (25, 32, 33, 34) are configured as interconnected shunt controllers.

## Revendications

1. Alimentation à découpage pour l'alimentation d'un utilisateur fonctionnant avec une charge variable ($R_L$), qui comprend un module de puissance (11), un circuit de pilotage (12) et un circuit de commande et de régulation (24, 31) pour former un signal d'entrée du circuit de pilotage (12) régulé en fonction du courant continu de sortie ($I_A$) de l'alimentation à découpage, **caractérisée par le fait que** le circuit de commande et de régulation (24, 31) comporte un nombre $n$ d'étages de régulation (25, 32, 33, 34), dont les sorties sont connectées en parallèle pour former le signal d'entrée du circuit de pilotage (12), que les étages de régulation (25, 32, 33, 34) sont agencés pour former un signal d'entrée résultant pour le circuit de pilotage (12) et que chacun des étages de régulation (25, 32, 33, 34) forme le signal de pilotage nécessaire pour une portion (1) à (n) concernée d'une courbe caractéristique (26) qui déclenche la variation de la tension continue de sortie ($U_A$) de l'alimentation à découpage, dans des zones prédéterminées du courant de continu de sortie ($I_A$), en accord chaque fois avec une caractéristique prédéterminée.

2. Alimentation à découpage selon la revendication 1, **caractérisée par le fait que** le module de puissance (11) est un convertisseur à modulation de largeur d'impulsion.

3. Alimentation à découpage selon revendication 1 ou 2, **caractérisée par le fait que** le signal d'entrée est transmis hors potentiel au circuit de pilotage (12) à l'aide d'un coupleur optique (OC).

4. Alimentation à découpage selon une des revendications précédentes, **caractérisée par le fait que** les étages de régulation (25, 32, 33, 34) sont des régulateurs shunt connectés en circuit.

Fig. 1

EP 1 148 626 B1

Fig. 2

EP 1 148 626 B1

Fig. 3